# EUROPEAN PATENT SPECIFICATION

(11) **EP 3 854 990 B1**
(45) Date of publication and mention of the grant of the patent: **27.09.2023**
(21) Application number: 18934351.0
(22) Date of filing: 27.12.2018
(51) Int. Cl.: E21D 9/06, F16J 15/40

(54) **MAIN DRIVE HIGH-PRESSURE SEALING SYSTEM FOR SHIELD MACHINE AND SLURRY BALANCE SHIELD MACHINE**
HAUPTANTRIEBHOCHDRUCKDICHTUNGSSYSTEM FÜR SCHILDMASCHINE UND SCHLAMMGLEICHGEWICHTSCHILDMASCHINE
SYSTÈME D'ÉTANCHÉITÉ À HAUTE PRESSION D'ENTRAÎNEMENT PRINCIPAL POUR MACHINE DE PROTECTION ET MACHINE DE PROTECTION D'ÉQUILIBRE DE BOUILLIE

(30) Priority: 17.09.2018 CN 201811092816
(43) Date of publication of application: 28.07.2021
(73) Proprietor: China Railway Construction Heavy Industry Corporation Limited, Changsha, Hunan 410100 (CN)
(72) Inventor: LIU, Feixiang, Changsha, Hunan 410100 (CN); CHENG, Yongliang, Changsha, Hunan 410100 (CN); XIAO, Qianlong, Changsha, Hunan 410100 (CN); WEN, Zhongbao, Changsha, Hunan 410100 (CN); WANG, Kai, Changsha, Hunan 410100 (CN); ZHANG, Shuaikun, Changsha, Hunan 410100 (CN); LIU, Hua, Changsha, Hunan 410100 (CN); ZHANG, Cheng, Changsha, Hunan 410100 (CN)
(74) Representative: Studio Torta S.p.A.
(86) International application number: PCT/CN2018/124333
(87) International publication number: WO 2020/056993

(56) References cited:
- EP-A2- 2 725 190
- CN-A- 101 280 847
- CN-A- 108 868 793
- CN-B- 106 223 964
- CN-U- 205 533 500
- CN-U- 207 049 619
- CN-U- 207 420 573
- CN-U- 208 702 412

## Description

### FIELD

The present application relates to the technical field of shield machines, and in particular to a main drive high-pressure sealing system for shield machine and a slurry balance shield machine having the same.

### BACKGROUND

With the further development of national infrastructure construction, construction of tunnels with large section, large buried depth, high water pressure, and long distance has gradually begun. In order to cope with these complicated and harsh working conditions, a kind of complicated tunnel boring equipment-shield machine, which integrates tunnel excavation, construction slag discharge and segment lining, is commonly used in tunnel construction. It has become a standard to measure the development of a country's construction machinery field. Prior art document CN106223964 B discloses a method for controlling a seal pressure of a main bearing of a shield tunneling machine. A shield tunneling machine control system, an HBW oil way and an EP2 oil way are adopted. The method includes steps: setting delta P1 and delta P2 in a control program of the shield tunneling machine control system, allowing the shield tunneling machine control system to acquire pressure P0 of a waste soil chamber, associating the HBW oil pressure with the pressure P0 of the waste soil chamber, associating EP2 oil pressure with the pressure P0 of the waste soil chamber, and guaranteeing relatively stable pressure difference between a first seal cavity and a second seal cavity, wherein P0 refers to the pressure of the waste soil chamber, and P1 refers to pressure of pilot-operated proportional pressure reducing valves. By addition of the pilot-operated proportional pressure reducing valves in the HBW oil way and the EP2 oil way, delivery pressure can be changed according to setup of the shield tunneling machine control system, and a closed pressure control system can be formed by pressure feedback; by linkage control of the pressure of the waste soil chamber, the pressure of the first seal cavity and the pressure of the second seal cavity, a dynamic balance is formed. Prior art document CN207049619 U discloses a full pneumatic pressure compensatory control system, including compressed air source, a pressure - compensated valve, the 3rd pressure -compensated valve, first pressure space, fourth pressure space, pressure discharge valve, the 2nd pressure -compensated valve, muffler connection, second pressure spatial join, third pressure space. The utility model discloses an advantage: can effectively improve system's bearing capacity, solve the problem that the high pressure bearing sealing system ability of tunnel construction is not enough, carry out pressure compensation to each sealed chamber to satisfy the positive supporting pressure requirement that pressure is greater than 6bar.

In high water pressure conditions such as tunneling through the river and the sea, the slurry balance shield machine needs to be used for tunneling. At present, the dominant and safe and reliable method is to use the indirect slurry balance shield machine with air cushion bin.

The main drive is an important part of the slurry balance shield machine, and the sealing performance of the main drive directly determines the water and soil pressure-bearing capacity of the shield machine. At present, the main drive of the shield machine mainly adopts rubber lip seal. In order to improve the water and soil pressure-bearing capacity, four sealing lips are generally provided. A labyrinth chamber is provided outside the first sealing lip, and fiber-rich grease is continuously injected into the chamber to resist the intrusion of external mud; a grease chamber P1 is formed by the first and second sealing lips, and is continuously filled with grease, which, on one hand, further improves the sealing capacity of the main drive, and, on the other hand, lubricates the sealing lips to reduce wear; a ring chamber formed by the second and third sealing lips is the oil and gas sealing chamber P2, that is, when the external water pressure exceeds a certain value, gear oil and air will be injected into this chamber to provide support for the sealing lips; the third sealing lip and the fourth sealing lip are generally installed opposite to each other to form a leak detection chamber P3; the fourth sealing lip is mainly configured to seal a gearbox P4 to prevent the internal gear oil from leaking.

The bearing capacity of a single rubber lip seal is generally about 3bar. In a case that the water and soil pressure is less than 3bar, the external water and soil pressure can be resisted by the grease pressure of the grease chamber P1, ensuring that the seal of the main drive is reliable.

In a case that the water and soil pressure is greater than 3bar and less than 6bar, the total pressure provided by the oil and gas sealing chamber P2 and the grease chamber P1 can also resist the external water and soil pressure.

In a case that the shield machine is operated at a large buried depth and a high water pressure, the water and soil pressure exceeds 6bar, so the conventional multi-lip combined seal is difficult to resist the external water pressure, and the external mud will penetrate the seal and invade the main drive, causing the shield machine to stop and delay of the project.

Besides, the main drive sealing system in the conventional technology mostly adopts manual operation when pressurizing, which requires higher operating experience of users and results in large errors. In severe cases, the manual operation may cause engineering disasters such as unstable slurry pressure, collapse of excavation face, roof fall and the like. In addition, the main drive sealing system in the conventional technology cannot realize automatic pressure reduction, and when there is no need to pressurize the sealing chamber, the exhaust ball valve needs to be manually opened, which has certain potential safety hazards.

**SUMMARY**

In view of this, an object of the present application is to provide a main drive high-pressure sealing system for shield machine and a slurry balance shield machine having the same, which realize pneumatic closed-loop feedback and follow-up response control, are safe and reliable, reduce human intervention, have a high degree of automation, and fundamentally improve the theoretical pressure-bearing capacity of the lip seal.

In order to achieve the above object, the following technical solutions are provided according to the present application.

A main drive high-pressure sealing system for shield machine includes an air cushion bin, an oil and gas sealing chamber, a compressed air input port, a first positive pneumatic regulating valve and a first negative pneumatic regulating valve, where
an inlet of the compressed air input port is used for connecting with an air source, an outlet of the compressed air input port is connected to an inlet of the first positive pneumatic regulating valve, an outlet of the first positive pneumatic regulating valve is connected to an inlet of the first negative pneumatic regulating valve and the oil and gas sealing chamber, and an outlet of the first negative pneumatic regulating valve is connected to an exhaust pipeline;
a positive pressure detection terminal of the first positive pneumatic regulating valve and a positive pressure detection terminal of the first negative pneumatic regulating valve are both connected to the air cushion bin;
a negative pressure detection terminal of the first positive pneumatic regulating valve and a negative pressure detection terminal of the first negative pneumatic regulating valve are both connected to the oil and gas sealing chamber;
when the pressure difference between the air cushion bin and the oil and gas sealing chamber is greater than or equal to a first preset value, the first positive pneumatic regulating valve is opened, and the first negative pneumatic regulating valve is in a closed state ("in a closed state" means that the valve member is closed at this time or has been closed in advance, the same applies hereinafter); and
when the pressure difference between the air cushion bin and the oil and gas sealing chamber is less than or equal to a second preset value, the first negative pneumatic regulating valve is opened, and the first positive pneumatic regulating valve is in a closed state.

Preferably, the main drive high-pressure sealing system for shield machine further includes a gearbox, a second positive pneumatic regulating valve and a second negative pneumatic regulating valve, where
the outlet of the compressed air input port is connected to an inlet of the second positive pneumatic regulating valve, an outlet of the second positive pneumatic regulating valve is connected to an inlet of the second negative pneumatic regulating valve and the gearbox, and an outlet of the second negative pneumatic regulating valve is connected to the exhaust pipeline;
a positive pressure detection terminal of the second positive pneumatic regulating valve and a positive pressure detection terminal of the second negative pneumatic regulating valve are both connected to the oil and gas sealing chamber;
a negative pressure detection terminal of the second positive pneumatic regulating valve and a negative pressure detection terminal of the second negative pneumatic regulating valve are both connected to the gearbox;
when the pressure difference between the oil and gas sealing chamber and the gearbox is greater than or equal to a third preset value, the second positive pneumatic regulating valve is opened, and the second negative pneumatic regulating valve is in a closed state; and
when the pressure difference between the oil and gas sealing chamber and the gearbox is less than or equal to a fourth preset value, the second negative pneumatic regulating valve is opened, and the second positive pneumatic regulating valve is in a closed state.

Preferably, the main drive high-pressure sealing system for shield machine further includes a leak detection chamber, a third positive pneumatic regulating valve and a third negative pneumatic regulating valve, where
the outlet of the second positive pneumatic regulating valve is connected to an inlet of the third positive pneumatic regulating valve, an outlet of the third positive pneumatic regulating valve is connected to an inlet of the third negative pneumatic regulating valve and the leak detection chamber, and an outlet of the third negative pneumatic regulating valve is connected to the exhaust pipeline;
a positive pressure detection terminal of the third positive pneumatic regulating valve and a positive pressure detection terminal of the third negative pneumatic regulating valve are both connected to the gearbox;
a negative pressure detection terminal of the third positive pneumatic regulating valve and a negative pressure detection terminal of the third negative pneumatic regulating valve are both connected to the leak detection chamber;
when the pressure difference between the gearbox and the leak detection chamber is greater than or equal to a fifth preset value, the third positive pneumatic regulating valve is opened, and the third negative pneumatic regulating valve is in a closed state; and
when the pressure difference between the gearbox and the leak detection chamber is less than or equal to a sixth preset value, the third negative pneumatic regulating valve is opened, and the third positive pneumatic regulating valve is in a closed state.

Preferably, in the main drive high-pressure sealing system for shield machine, a first check valve is provided at the outlet of the first negative pneumatic regulating valve;
and/or, a second check valve is provided at the outlet of the second negative pneumatic regulating valve;
and/or, a third check valve is provided at the outlet of the third negative pneumatic regulating valve.

Preferably, in the main drive high-pressure sealing system for shield machine, a first safety valve and/or a first pressure sensor is further provided on an outlet connecting pipeline of the first positive pneumatic regulating valve;
and/or a second safety valve and/or a second pressure sensor is further provided on an outlet connecting pipeline of the second positive pneumatic regulating valve;
and/or a third safety valve and/or a third pressure sensor is further provided on an outlet connecting pipeline of the third positive pneumatic regulating valve.

Preferably, the main drive high-pressure sealing system for shield machine further includes an emergency pressure relief pipeline connected to the oil and gas sealing chamber, the gearbox and the leak detection chamber.

Preferably, in the main drive high-pressure sealing system for shield machine, a fourth check valve is provided between the oil and gas sealing chamber and the emergency pressure relief pipeline;
and/or, a fifth check valve is provided between the gearbox and the emergency pressure relief pipeline;
and/or, a sixth check valve is provided between the leak detection chamber and the emergency pressure relief pipeline;
and/or, a first ball valve is provided on the emergency pressure relief pipeline;
and/or, a first muffler is arranged on the emergency pressure relief pipeline.

Preferably, in the main drive high-pressure sealing system for shield machine, a second muffler is provided on the exhaust pipeline.

A slurry balance shield machine provided with the main drive high-pressure sealing system for shield machine as described above is further disclosed.

Preferably, the above slurry balance shield machine further includes
a liquid level controller configured to detect liquid level in a gear oil chamber;
and/or, a respirator configured to empty the gearbox;
and/or, an oil and gas sealing tank provided between the oil and gas sealing chamber and the gear oil chamber, where a high limit liquid level switch and/or a low limit liquid level switch are provided on the oil and gas sealing tank.

It can be seen from the above technical solutions that, the main drive high-pressure sealing system for shield machine and the slurry balance shield machine having the same according to the present application adopt full pneumatic control, and achieve pneumatic closed-loop feedback, follow-up response control and high-precision control. It can be ensured that, the main drive sealing structure can still reliably resist the external water and soil pressure when the power in the tunnel is cut off, which is not only safe and reliable, reduces human intervention, and has a high degree of automation, but also fundamentally improves the theoretical pressure-bearing capacity of the lip seal. Moreover, in the main drive high-pressure sealing system for shield machine, while the exhaust pipeline is exhausting, automatic and differential-pressure type exhaust and pressure relief are realized through the first negative pneumatic regulating valve, thereby making the system more sensitive and reducing the overshoot, which is beneficial to increasing the stability of the system. In addition, by adopting the main drive high-pressure sealing system for shield machine and the slurry balance shield machine having the same according to the present application, the main drive of the slurry balance shield machine can still be reliably sealed under the conditions of large buried depth and high water pressure, especially when the water pressure is higher than 6 bar.

### BRIEF DESCRIPTION OF THE DRAWINGS

For more clearly illustrating the technical solutions of embodiments of the present application or in the conventional technology, drawings referred to for describing the embodiments or the conventional technology will be briefly described hereinafter. Apparently, the drawings in the following description are only several examples of the present application, and for those skilled in the art, other drawings may be obtained based on these drawings without any creative efforts.
FIG. 1 is a schematic diagram of a gas path structure of a main drive high-pressure sealing system for shield machine according to an embodiment of the present application;
FIG. 2 is a schematic diagram of the main drive sealing structure for shield machine according to an embodiment of the present application; and
FIG. 3 is a schematic structural diagram of the main drive high-pressure sealing system for shield machine according to an embodiment of the present application.

**Reference numerals in the drawings:**

| | | | |
|---|---|---|---|
| P1 | grease chamber, | P2 | oil and gas sealing chamber, |
| P3 | leak detection chamber, | P4 | gearbox, |
| 1 | air filter, | 8 | first ball valve, |
| 11 | oil and gas sealing tank, | 12 | liquid level controller, |
| 13 | respirator, | 21 | first positive pneumatic control valve, |
| 22 | second positive pneumatic control valve, | | |
| 23 | third positive pneumatic regulating valve, | | |
| 31 | first safety valve, | 32 | second safety valve, |
| 33 | third safety valve, | 41 | first pressure sensor, |
| 42 | second pressure sensor, | 43 | third pressure sensor, |
| 51 | first negative pneumatic control valve, | | |
| 52 | second negative pneumatic control valve, | | |
| 53 | third negative pneumatic regulating valve, | | |
| 61 | first check valve, | 62 | second check valve, |
| 63 | third check valve, | 71 | fourth check valve, |
| 72 | fifth check valve, | 73 | sixth check valve, |
| 91 | first muffler, | 92 | second muffler, |
| 101 | high limit liquid level switch, | 102 | low limit liquid level switch. |

### DETAILED DESCRIPTION OF THE EMBODIMENTS

A main drive high-pressure sealing system for shield machine and a slurry balance shield machine having the same are disclosed according to the present application, which realize pneumatic closed-loop feedback and follow-up response control, are safe and reliable, reduce human intervention, have a high degree of automation, and fundamentally improve the theoretical pressure-bearing capacity of the lip seal.

The technical solution according to the embodiments of the present application will be described clearly and completely as follows in conjunction with the drawings of the embodiments of the present application. It is apparent that the described embodiments are only a few of the embodiments rather than all of the embodiments of the present application. Based on the embodiments in the present application, all of other embodiments, made by the person skilled in the art without any creative efforts, fall into the scope of protection of the present application.

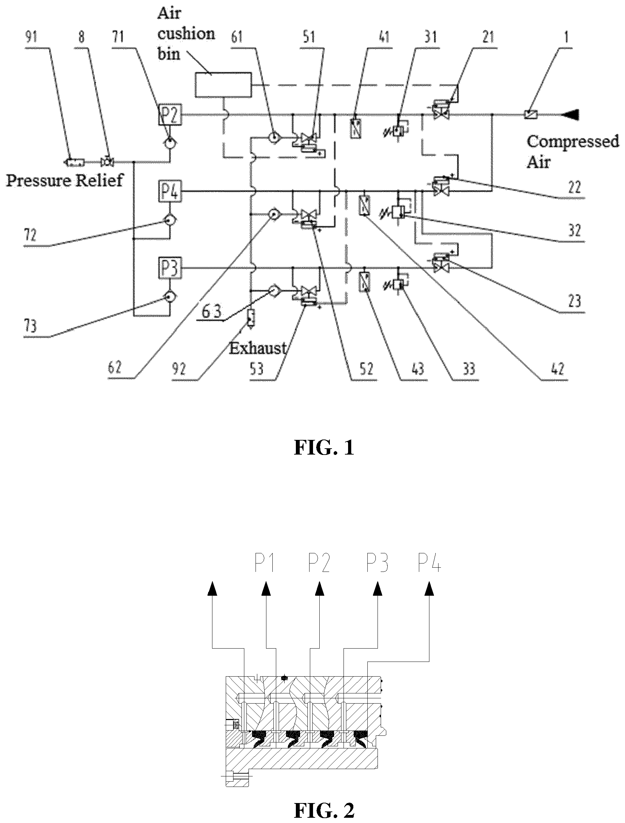

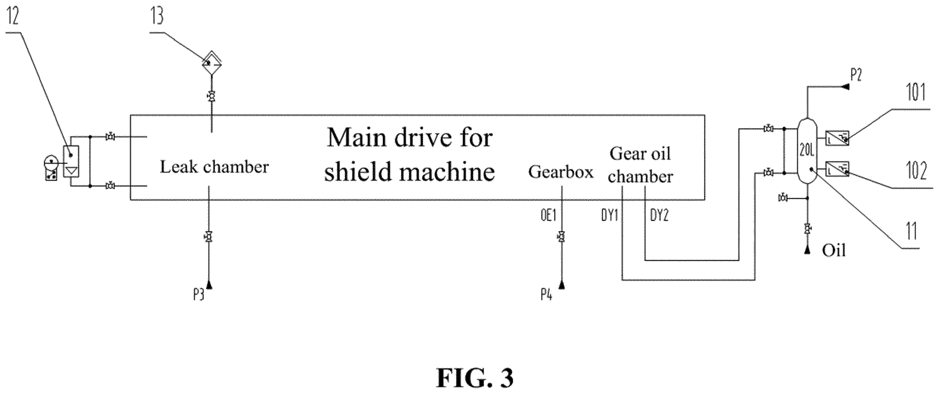

Referring to FIGS. 1 to 3, FIG. 1 is a schematic diagram of a gas path structure of a main drive high-pressure sealing system for shield machine according to an embodiment of the present application, FIG. 2 is a schematic diagram of the main drive sealing structure for shield machine according to an embodiment of the present application, and FIG. 3 is a schematic structural diagram of the main drive high-pressure sealing system for shield machine according to an embodiment of the present application.

The main drive high-pressure sealing system for shield machine provided by the embodiment of the present application mainly includes three main gas paths, namely a first gas path, a second gas path and a third gas path.

In a specific embodiment, the first gas path includes an air cushion bin, an oil and gas sealing chamber P2, a compressed air input port, a first positive pneumatic regulating valve 21 and a first negative pneumatic regulating valve 51, where
an inlet of the compressed air input port is used for connecting with an air source, an outlet of the compressed air input port is connected to an inlet of the first positive pneumatic regulating valve 21, an outlet of the first positive pneumatic regulating valve 21 is connected to an inlet of the first negative pneumatic regulating valve 51 and the oil and gas sealing chamber P2, and an outlet of the first negative pneumatic regulating valve 51 is connected to an exhaust pipeline; and
a positive pressure detection terminal "+" of the first positive pneumatic regulating valve 21 and a positive pressure detection terminal "+" of the first negative pneumatic regulating valve 51 are both connected to the air cushion bin; and a negative pressure detection terminal "-" of the first positive pneumatic regulating valve 21 and a negative pressure detection terminal "-" of the first negative pneumatic regulating valve 51 are both connected to the oil and gas sealing chamber P2.

Specifically, when the pressure difference between the air cushion bin and the oil and gas sealing chamber P2 is greater than or equal to a first preset value, the first positive pneumatic regulating valve 21 is opened, and the first negative pneumatic regulating valve 51 is in a closed state ("in a closed state" means that the valve member is closed at this time or has been closed in advance, the same applies hereinafter); and when the pressure difference between the air cushion bin and the oil and gas sealing chamber P2 is less than or equal to a second preset value, the first negative pneumatic regulating valve 51 is opened, and the first positive pneumatic regulating valve 21 is in a closed state.

The "first preset value" is set according to the minimum opening value (i.e. the first positive pneumatic regulating valve 21 is opened and unblocked when the pressure difference reaches or exceeds this value) preset in the first positive pneumatic regulating valve 21 and the minimum closing value (i.e. the first negative pneumatic regulating valve 51 is closed and occluded when the pressure difference reaches or exceeds this value) preset in the first negative pneumatic regulating valve 51. Preferably, the first preset value equals to the minimum opening value of the first positive pneumatic regulating valve 21 and is greater than or equal to the minimum closing value of the first negative pneumatic regulating valve 51.

The "second preset value" is set according to the maximum closing value (i.e. the first positive pneumatic regulating valve 21 is closed and occluded when the pressure difference reaches or is smaller than this value) preset in the first positive pneumatic regulating valve 21 and the maximum opening value (i.e. the first negative pneumatic regulating valve 51 is opened and unblocked when the pressure difference reaches or is smaller than this value) preset in the first negative pneumatic regulating valve 51. Preferably, the second preset value equals to the maximum opening value of the first negative pneumatic regulating valve 51 and is less than or equal to the maximum closing value of the first positive pneumatic regulating valve 21.

Therefore,
1) when the pressure difference between the air cushion bin and the oil and gas sealing chamber P2 rises to or exceeds the first preset value, the first positive pneumatic regulating valve 21 is opened, and the first negative pneumatic regulating valve 51 is in a closed state, and compressed air is charged into the oil and gas sealing chamber P2 (i.e., the oil and gas sealing tank 11) after passing through the compressed air input port and the first positive pneumatic regulating valve 21;
2) the oil and gas sealing chamber P2 is continuously charged until the total pressure of the oil and gas sealing chamber P2 and the grease chamber P1 can balance the external water and soil pressure, so that the main drive seal is reliable, and preferably, at this time, the pressure difference between the air cushion bin and the oil and gas sealing chamber P2 reaches or is smaller than an intermediate value (which is smaller than the first preset value and smaller or equal to the rated pressure of the grease chamber P1) preset in the first positive pneumatic regulating valve 21, and the first positive pneumatic regulating valve 21 is closed (or, in other specific embodiments, the first positive pneumatic regulating valve 21 may be still in an open state where the delivery capacity of the first positive pneumatic regulating valve is small, to compensate for leakage);
3) if the pressure in the air cushion bin decreases, then when the pressure difference between the air cushion bin and the oil and gas sealing chamber P2 is less than or equal to the second preset value, the first negative pneumatic regulating valve 51 is opened and the first positive pneumatic regulating valve 21 is in a closed state, and at this time, the compressed air in the oil and gas sealing chamber P2 is discharged through the first negative pneumatic regulating valve 51; and
4) the compressed air in the oil and gas sealing chamber P2 is continuously discharged until the pressure difference between the air cushion bin and the oil and gas sealing chamber P2 reaches an intermediate value (which is greater than the second preset value) preset in the first negative pneumatic regulating valve 51, and the first negative pneumatic regulating valve 51 is closed.

In a specific embodiment, in the main drive high-pressure sealing system for shield machine, the air source for generating the compressed air is an air compressor outside the tunnel. During operation, after filtered by an air filter 1, the compressed air enters the compressed air input port of the main drive high-pressure sealing system for shield machine, and then enters the main drive high-pressure sealing system for shield machine.

It can be seen from the above technical solution that, the main drive high-pressure sealing system for shield machine provided by the embodiment of the present application adopts full pneumatic control, and achieves pneumatic closed-loop feedback, follow-up response control and high-precision control. It can be ensured that, the main drive sealing structure can still reliably resist the external water and soil pressure when the power in the tunnel is cut off, which is not only safe and reliable, reduces human intervention, and has a high degree of automation, but also fundamentally improves the theoretical pressure-bearing capacity of the lip seal.

Moreover, in the main drive high-pressure sealing system for shield machine, while the exhaust pipeline is exhausting, automatic and differential-pressure type exhaust and pressure relief are realized through the first negative pneumatic regulating valve 51, thereby making the system more sensitive and reducing the overshoot, which is beneficial to increasing the stability of the system.

In an embodiment, the main drive high-pressure sealing system for shield machine is applicable for a slurry balance shield machine to ensure that the main drive of the slurry balance shield machine can still be reliably sealed under the conditions of large buried depth and high water pressure, especially when the water pressure is higher than 6 bar.

In a specific embodiment, the second gas path of the main drive high-pressure sealing system for shield machine includes the oil and gas sealing chamber P2, a gearbox P4, a second positive pneumatic regulating valve 22 and a second negative pneumatic regulating valve 52, where
the outlet of the compressed air input port is connected to an inlet of the second positive pneumatic regulating valve 22, an outlet of the second positive pneumatic regulating valve 22 is connected to an inlet of the second negative pneumatic regulating valve 52 and the gearbox P4, and an outlet of the second negative pneumatic regulating valve 52 is connected to the exhaust pipeline; and
a positive pressure detection terminal "+" of the second positive pneumatic regulating valve 22 and a positive pressure detection terminal "+" of the second negative pneumatic regulating valve 52 are both connected to the oil and gas sealing chamber P2; and a negative pressure detection terminal "-" of the second positive pneumatic regulating valve 22 and a negative pressure detection terminal "-" of the second negative pneumatic regulating valve 52 are both connected to the gearbox.

Specifically, when the pressure difference between the oil and gas sealing chamber P2 and the gearbox P4 is greater than or equal to a third preset value, the second positive pneumatic regulating valve 22 is opened, and the second negative pneumatic regulating valve 52 is in a closed state; and when the pressure difference between the oil and gas sealing chamber P2 and the gearbox P4 is less than or equal to a fourth preset value, the second negative pneumatic regulating valve 52 is opened, and the second positive pneumatic regulating valve 22 is in a closed state.

The "third preset value" is set according to the minimum opening value (i.e. the second positive pneumatic regulating valve 22 is opened and unblocked when the pressure difference reaches or exceeds this value) preset in the second positive pneumatic regulating valve 22 and the minimum closing value (i.e. the second negative pneumatic regulating valve 52 is closed and occluded when the pressure difference reaches or exceeds this value) preset in the second negative pneumatic regulating valve 52. Preferably, the third preset value equals to the minimum opening value of the second positive pneumatic regulating valve 22 and is greater than or equal to the minimum closing value of the second negative pneumatic regulating valve 52.

The "fourth preset value" is set according to the maximum closing value (i.e. the second positive pneumatic regulating valve 22 is closed and occluded when the pressure difference reaches or is smaller than this value) preset in the second positive pneumatic regulating valve 22 and the maximum opening value (i.e. the second negative pneumatic regulating valve 52 is opened and unblocked when the pressure difference reaches or is smaller than this value) preset in the second negative pneumatic regulating valve 52. Preferably, the fourth preset value equals to the maximum opening value of the second negative pneumatic regulating valve 52 and is less than or equal to the maximum closing value of the second positive pneumatic regulating valve 22.

Therefore,
1) to prevent leakage of gear oil in the gearbox caused by excessive pressure, when the pressure difference between the oil and gas sealing chamber P2 and the gearbox P4 is larger than the third preset value, the second positive pneumatic regulating valve 22 is opened, and the second negative pneumatic regulating valve 52 is in a closed state, and the compressed air is charged into the gearbox P4 after passing through the compressed air input port and the second positive pneumatic regulating valve 22, to charge the gearbox;
2) the gearbox P4 is continuously charged until the pressure difference between the oil and gas sealing chamber P2 and the gearbox P4 reaches or is smaller than an intermediate value (which is smaller than the third preset value) preset in the second positive pneumatic regulating valve 22, and at this time, the second positive pneumatic regulating valve 22 is closed (or, in other specific embodiments, the second positive pneumatic regulating valve 22 may be still in an open state where the delivery capacity of the second positive pneumatic regulating valve is small, to compensate for leakage);
3) when the pressure in the air cushion bin decreases, the pressure in the oil and gas sealing chamber P2 decreases as well, and when the pressure difference between the oil and gas sealing chamber P2 and the gearbox P4 is less than or equal to the fourth preset value, the second negative pneumatic regulating valve 52 is opened and the second positive pneumatic regulating valve 22 is in a closed state, and at this time, the compressed air in the gearbox P4 is discharged through the second negative pneumatic regulating valve 52; and
4) the compressed air in the gearbox P4 is continuously discharged until the pressure difference between the oil and gas sealing chamber P2 and the gearbox P4 reaches an intermediate value (which is greater than the fourth preset value) preset in the second negative pneumatic regulating valve 52, and the second negative pneumatic regulating valve 52 is closed.

In a specific embodiment, the third gas path of the main drive high-pressure sealing system for shield machine includes the gearbox P4, a leak detection chamber P3, a third positive pneumatic regulating valve 23 and a third negative pneumatic regulating valve 53, where
the outlet of the second positive pneumatic regulating valve 22 is connected to an inlet of the third positive pneumatic regulating valve 23, an outlet of the third positive pneumatic regulating valve 23 is connected to an inlet of the third negative pneumatic regulating valve 53 and the leak detection chamber P3, and an outlet of the third negative pneumatic regulating valve 53 is connected to the exhaust pipeline; and
a positive pressure detection terminal "+" of the third positive pneumatic regulating valve 23 and a positive pressure detection terminal "+" of the third negative pneumatic regulating valve 53 are both connected to the gearbox P4; a negative pressure detection terminal "-" of the third positive pneumatic regulating valve 23 and a negative pressure detection terminal "-" of the third negative pneumatic regulating valve 53 are both connected to the leak detection chamber P3.

Specifically, when the pressure difference between the gearbox P4 and the leak detection chamber P3 is greater than or equal to a fifth preset value, the third positive pneumatic regulating valve 23 is opened, and the third negative pneumatic regulating valve 53 is in a closed state; and when the pressure difference between the gearbox P4 and the leak detection chamber P3 is less than or equal to a sixth preset value, the third negative pneumatic regulating valve 53 is opened, and the third positive pneumatic regulating valve 23 is in a closed state.

The "fifth preset value" is set according to the minimum opening value (i.e. the third positive pneumatic regulating valve 23 is opened and unblocked when the pressure difference reaches or exceeds this value) preset in the third positive pneumatic regulating valve 23 and the minimum closing value (i.e. the third negative pneumatic regulating valve 53 is closed and occluded when the pressure difference reaches or exceeds this value) preset in the third negative pneumatic regulating valve 53. Preferably, the fifth preset value equals to the minimum opening value of the third positive pneumatic regulating valve 23 and is greater than or equal to the minimum closing value of the third negative pneumatic regulating valve 53.

The "sixth preset value" is set according to the maximum closing value (i.e. the third positive pneumatic regulating valve 23 is closed and occluded when the pressure difference reaches or is smaller than this value) preset in the third positive pneumatic regulating valve 23 and the maximum opening value (i.e. the third negative pneumatic regulating valve 53 is opened and unblocked when the pressure difference reaches or is smaller than this value) preset in the third negative pneumatic regulating valve 53. Preferably, the sixth preset value equals to the maximum opening value of the third negative pneumatic regulating valve 53 and is less than or equal to the maximum closing value of the third positive pneumatic regulating valve 23.

Therefore,
1) when the pressure difference between the gearbox P4 and the leak detection chamber P3 is greater than or equal to the fifth preset value, the third positive pneumatic regulating valve 23 is opened, and the third negative pneumatic regulating valve 53 is in a closed state, and the compressed air is charged into the leak detection chamber P3 after passing through the compressed air input port, the second positive pneumatic regulating valve 22, and the third positive pneumatic regulating valve 23;
2) the leak detection chamber P3 is continuously charged until the total pressure of the leak detection chamber P3, the oil and gas sealing chamber P2 and the grease chamber P1 can balance the external water and soil pressure, so that the main drive seal is reliable, and preferably, at this time, the pressure difference between the gearbox P4 and the leak detection chamber P3 reaches or is smaller than an intermediate value (which is smaller than the fifth preset value) preset in the third positive pneumatic regulating valve 23, and the third positive pneumatic regulating valve 23 is closed (or, in other specific embodiments, the third positive pneumatic regulating valve 23 may be still in an open state where the delivery capacity of the third positive pneumatic regulating valve is small, to compensate for leakage);
3) when the pressure in the air cushion bin decreases, the pressure in the leak detection chamber P3 decreases as well, and when the pressure difference between the gearbox P4 and the leak detection chamber P3 is less than or equal to the sixth preset value, the third negative pneumatic regulating valve 53 is opened, and the third positive pneumatic regulating valve 23 is in a closed state. at this time, the compressed air in the leakage detection chamber P3 is discharged through the third reaction pneumatic regulating valve 53;
4) the compressed air in the leak detection chamber P3 is continuously discharged until the pressure difference between the gearbox P4 and the leak detection chamber P3 reaches an intermediate value (which is greater than the sixth preset value) preset in the third negative pneumatic regulating valve 53, and the third negative pneumatic regulating valve 53 is closed.

In order to further optimize the above technical solution, as shown in Figure 1, in the main drive high-pressure sealing system for shield machine, in order to prevent excessive sealing pressure cause by damage of any valve member, an emergency pressure relief pipeline connected to the oil and gas sealing chamber P2, the gearbox P4 and the leak detection chamber P3 is further provided. Preferably, a first ball valve 8 and a first muffler 91 are provided on the emergency pressure relief pipeline. When the external water pressure decreases to the pressure bearing range of a single seal of the main drive, the first ball valve 8 is opened, and the compressed air in the oil and gas sealing chamber P2, the leak detection chamber P3 and the gearbox P4 is discharged and relieved through the emergency pressure relief pipeline respectively.

In a specific embodiment, as shown in FIG. 1, a second muffler 92 is provided on the exhaust pipeline of the main drive high-pressure sealing system for shield machine. The first muffler 91 and the second muffler 92 can reduce noise pollution during exhaust.

In order to further optimize the above technical solution, in the main drive high-pressure sealing system for shield machine, a first check valve 61 is provided at the outlet of the first negative pneumatic regulating valve 51; a second check valve 62 is provided at the outlet of the second negative pneumatic regulating valve 52; and a third check valve 63 is provided at the outlet of the third negative pneumatic regulating valve 53. Specifically, the first check valve 61, the second check valve 62, and the third check valve 63 are connected in parallel to the above exhaust pipeline.

Further, in the main drive high-pressure sealing system for shield machine, a fourth check valve 71 is provided between the oil and gas sealing chamber P2 and the emergency pressure relief pipeline; a fifth check valve 72 is provided between the gearbox P4 and the emergency pressure relief pipeline; and a sixth check valve 73 is provided between the leak detection chamber P3 and the emergency pressure relief pipeline. Specifically, the fourth check valve 71, the fifth check valve 72, and the sixth check valve 73 are connected in parallel to the above emergency pressure relief pipeline.

In order to further optimize the above technical solution, in the main drive high-pressure sealing system for shield machine,
a first safety valve 31 and a first pressure sensor 41 are further connected to the outlet of the first positive pneumatic regulating valve 21 (i.e., an outlet connecting pipeline of the first positive pneumatic regulating valve 21). The first safety valve 31 is configured to ensure that the pressure of the oil and gas sealing chamber P2 is within a controllable range, and to prevent the seal from being damaged due to excessive pressure. The first pressure sensor 41 is configured to collect the pressure data of the oil and gas sealing chamber P2 in real time, which is convenient for analysis, display and storage;
a second safety valve 32 and a second pressure sensor 42 are further connected to the outlet of the second positive pneumatic regulating valve 22 (i.e., an outlet connecting pipeline of the second positive pneumatic regulating valve 22). The second safety valve 32 is configured to ensure that the pressure of the gearbox P4 is within a controllable range, and to prevent the seal from being damaged due to excessive pressure. The second pressure sensor 42 is configured to collect the pressure data of the gearbox P4 in real time, which is convenient for analysis, display and storage; and
a third safety valve 33 and a third pressure sensor 43 are further connected to the outlet of the third positive pneumatic regulating valve 23 (i.e., an outlet connecting pipeline of the third positive pneumatic regulating valve 23). The third safety valve 33 is configured to ensure that the pressure of the leak detection chamber P3 is within a controllable range, and to prevent the seal from being damaged due to excessive pressure. The third pressure sensor 43 is configured to collect the pressure data of the leak detection chamber P3 in real time, which is convenient for analysis, display and storage.

Besides, a slurry balance shield machine is further provided according to the embodiment of the present application, and the slurry balance shield machine is provided with the main drive high-pressure sealing system for shield machine as described above.

Specifically, as shown in FIG. 3, the above slurry balance shield machine further includes a liquid level controller 12, a respirator 13, and an oil and gas sealing tank 11, where:
the liquid level controller 12 is configured to detect the liquid level in a gear oil chamber and perform chain protection for the gear oil chamber. When the liquid level is lower than a required low limit, a shutdown signal is triggered;
the respirator 13 is configured to empty the gearbox P4 to prevent pressure accumulation, and moreover, in order to prevent the respirator 13 from being damaged in the high pressure stage, a second ball valve is additionally mounted between the respirator 13 and the main drive; and
the oil and gas sealing tank 11 is arranged between the oil and gas sealing chamber P2 and the gear oil chamber, and the oil and gas sealing tank 11 is provided with a high limit liquid level switch 101 and a low limit liquid level switch 102, and oil has to be drained from the oil and gas sealing tank 11 when the high limit liquid level switch 101 is triggered, and oil has to be added to the oil and gas sealing tank 11 when the low limit liquid level switch 102 is triggered.

To sum up, the main drive high-pressure sealing system for shield machine and the slurry balance shield machine provided with the system according to the embodiment of the present application have at least the following beneficial effects:
1) the regulating valves are logically interconnected, making the system safe and reliable;
2) the control process does not require human involvement, and the degree of automation is high;
3) the closed-loop feedback allows the system control accuracy to be higher; and
4) the main drive is still sealed and reliable, when the water pressure is higher than 6bar.

## Claims

1. A main drive high-pressure sealing system for shield machine comprising an air cushion bin, an oil and gas sealing chamber (P2), a compressed air input port, a first positive pneumatic regulating valve (21) and a first negative pneumatic regulating valve (51), wherein
an inlet of the compressed air input port is configured to connect with an air source, an outlet of the compressed air input port is connected to an inlet of the first positive pneumatic regulating valve (21), an outlet of the first positive pneumatic regulating valve (21) is connected to an inlet of the first negative pneumatic regulating valve (51) and the oil and gas sealing chamber (P2), and an outlet of the first negative pneumatic regulating valve (51) is connected to an exhaust pipeline;
a positive pressure detection terminal of the first positive pneumatic regulating valve (21) and a positive pressure detection terminal of the first negative pneumatic regulating valve (51) are both connected to the air cushion bin;
a negative pressure detection terminal of the first positive pneumatic regulating valve (21) and a negative pressure detection terminal of the first negative pneumatic regulating valve (51) are both connected to the oil and gas sealing chamber (P2);
when pressure difference between the air cushion bin and the oil and gas sealing chamber (P2) is greater than or equal to a first preset value, the first positive pneumatic regulating valve (21) is opened, and the first negative pneumatic regulating valve (51) is in a closed state; and
when the pressure difference between the air cushion bin and the oil and gas sealing chamber (P2) is less than or equal to a second preset value, the first negative pneumatic regulating valve (51) is opened, and the first positive pneumatic regulating valve (21) is in a closed state.

2. The main drive high-pressure sealing system for shield machine according to claim 1, further comprising a gearbox (P4), a second positive pneumatic regulating valve (22) and a second negative pneumatic regulating valve (52), wherein
the outlet of the compressed air input port is connected to an inlet of the second positive pneumatic regulating valve (22), an outlet of the second positive pneumatic regulating valve (22) is connected to an inlet of the second negative pneumatic regulating valve (52) and the gearbox (P4), and an outlet of the second negative pneumatic regulating valve (52) is connected to the exhaust pipeline;
a positive pressure detection terminal of the second positive pneumatic regulating valve (22) and a positive pressure detection terminal of the second negative pneumatic regulating valve (52) are both connected to the oil and gas sealing chamber (P2);
a negative pressure detection terminal of the second positive pneumatic regulating valve (22) and a negative pressure detection terminal of the second negative pneumatic regulating valve (52) are both connected to the gearbox (P4);
when the pressure difference between the oil and gas sealing chamber (P2) and the gearbox (P4) is greater than or equal to a third preset value, the second positive pneumatic regulating valve (22) is opened, and the second negative pneumatic regulating valve (52) is in a closed state; and
when the pressure difference between the oil and gas sealing chamber (P2) and the gearbox (P4) is less than or equal to a fourth preset value, the second negative pneumatic regulating valve (52) is opened, and the second positive pneumatic regulating valve (22) is in a closed state.

3. The main drive high-pressure sealing system for shield machine according to claim 2, further comprising a leak detection chamber (P3), a third positive pneumatic regulating valve (23) and a third negative pneumatic regulating valve (53), wherein
the outlet of the second positive pneumatic regulating valve (22) is connected to an inlet of the third positive pneumatic regulating valve (23), an outlet of the third positive pneumatic regulating valve (23) is connected to an inlet of the third negative pneumatic regulating valve (53) and the leak detection chamber (P3), and an outlet of the third negative pneumatic regulating valve (53) is connected to the exhaust pipeline;
a positive pressure detection terminal of the third positive pneumatic regulating valve (23) and a positive pressure detection terminal of the third negative pneumatic regulating valve (53) are both connected to the gearbox (P4);
a negative pressure detection terminal of the third positive pneumatic regulating valve (23) and a negative pressure detection terminal of the third negative pneumatic regulating valve (53) are both connected to the leak detection chamber (P3);
when the pressure difference between the gearbox (P4) and the leak detection chamber (P3) is greater than or equal to a fifth preset value, the third positive pneumatic regulating valve (23) is opened, and the third negative pneumatic regulating valve (53) is in a closed state; and
when the pressure difference between the gearbox (P4) and the leak detection chamber (P3) is less than or equal to a sixth preset value, the third negative pneumatic regulating valve (23) is opened, and the third positive pneumatic regulating valve (53) is in a closed state.

4. The main drive high-pressure sealing system for shield machine according to claim 3, wherein a first check valve (61) is provided at the outlet of the first negative pneumatic regulating valve (51);
and/or, a second check valve (62) is provided at the outlet of the second negative pneumatic regulating valve (52);
and/or, a third check valve (63) is provided at the outlet of the third negative pneumatic regulating valve (53).

5. The main drive high-pressure sealing system for shield machine according to claim 3, wherein a first safety valve (31) and/or a first pressure sensor (41) is further provided on an outlet connecting pipeline of the first positive pneumatic regulating valve (21);
and/or a second safety valve (32) and/or a second pressure sensor (42) is further provided on an outlet connecting pipeline of the second positive pneumatic regulating valve (22);
and/or a third safety valve (33) and/or a third pressure sensor (43) is further provided on an outlet connecting pipeline of the third positive pneumatic regulating valve (23).

6. The main drive high-pressure sealing system for shield machine according to claim 3, further comprising an emergency pressure relief pipeline connected to the oil and gas sealing chamber (P2), the gearbox (P4) and the leak detection chamber (P3).

7. The main drive high-pressure sealing system for shield machine according to claim 6, wherein a fourth check valve (71) is provided between the oil and gas sealing chamber (P2) and the emergency pressure relief pipeline;
and/or, a fifth check valve (72) is provided between the gearbox (P4) and the emergency pressure relief pipeline;
and/or, a sixth check valve (73) is provided between the leak detection chamber (P3) and the emergency pressure relief pipeline;
and/or, a first ball valve (8) is provided on the emergency pressure relief pipeline;
and/or, a first muffler (91) is provided on the emergency pressure relief pipeline.

8. The main drive high-pressure sealing system for shield machine according to claim 1, wherein a second muffler (92) is provided on the exhaust pipeline.

9. A slurry balance shield machine, provided with the main drive high-pressure sealing system for shield machine according to any one of claims 1 to 8.

10. The slurry balance shield machine according to claim 9, further comprising
a liquid level controller (12) configured to detect a liquid level in a gear oil chamber;
and/or, a respirator (13) configured to empty the gearbox (P4);
and/or, an oil and gas sealing tank (11) provided between the oil and gas sealing chamber (P2) and the gear oil chamber, wherein a high limit liquid level switch (101) and/or a low limit liquid level switch (102) are provided on the oil and gas sealing tank (11).

## Patentansprüche

1. Hauptantriebshochdruckdichtungssystem für eine Schildmaschine, das einen Luftkissenbehälter, eine Öl- und Gasdichtungskammer (P2), einen Druckluft-Eingangsport, ein erstes positives Pneumatik-Regelventil (21) und ein erstes negatives Pneumatik-Regelventil (51) umfasst, wobei
ein Einlass des Druckluft-Eingangsports so konfiguriert ist, dass er die Verbindung zu einer Luftquelle herstellt, ein Auslass des Druckluft-Eingangsports mit einem Einlass des ersten positiven Pneumatik-Regelventils (21) verbunden ist, ein Auslass des ersten positiven Pneumatik-Regelventils (21) mit einem Einlass des ersten negativen Pneumatik-Regelventils (51) und der Öl- und Gasdichtungskammer (P2) verbunden ist, und ein Auslass des ersten negativen Pneumatik-Regelventils (51) mit einer Abgasleitung verbunden ist;
sowohl ein Überdruckdetektionsanschluss des ersten positiven Pneumatik-Regelventils (21) als auch ein Überdruckdetektionsanschluss des ersten negativen Pneumatik-Regelventils (51) mit dem Luftkissenbehälter verbunden sind;
sowohl ein Unterdruckdetektionsanschluss des ersten positiven Pneumatik-Regelventils (21) als auch ein Unterdruckdetektionsanschluss des ersten negativen Pneumatik-Regelventils (51) mit der Öl- und Gasdichtungskammer (P2) verbunden sind;
wenn eine Druckdifferenz zwischen dem Luftkissenbehälter und der Öl- und Gasdichtungskammer (P2) größer als oder gleich einem ersten voreingestellten Wert ist, das erste positive Pneumatik-Regelventil (21) geöffnet wird und das erste negative Pneumatik-Regelventil (51) sich in einem geschlossenen Zustand befindet; und
wenn die Druckdifferenz zwischen dem Luftkissenbehälter und der Öl- und Gasdichtungskammer (P2) kleiner als oder gleich einem zweiten voreingestellten Wert ist, das erste negative Pneumatik-Regelventil (51) geöffnet wird und das erste positive Pneumatik-Regelventil (21) sich in einem geschlossenen Zustand befindet.

2. Hauptantriebshochdruckdichtungssystem für eine Schildmaschine nach Anspruch 1, das weiter ein Getriebe (P4), ein zweites positives Pneumatik-Regelventil (22) und ein zweites negatives Pneumatik-Regelventil (52) umfasst, wobei
der Auslass des Druckluft-Eingangsports mit einem Einlass des zweiten positiven Pneumatik-Regelventils (22) verbunden ist, ein Auslass des zweiten positiven Pneumatik-Regelventils (22) mit einem Einlass des zweiten negativen Pneumatik-Regelventils (52) und dem Getriebe (P4) verbunden ist und ein Auslass des zweiten negativen Pneumatik-Regelventils (52) mit der Abgasleitung verbunden ist;
sowohl ein Überdruckdetektionsanschluss des zweiten positiven Pneumatik-Regelventils (22) als auch ein Überdruckdetektionsanschluss des zweiten negativen Pneumatik-Regelventils (52) mit der Öl- und Gasdichtungskammer (P2) verbunden sind;
sowohl ein Unterdruckdetektionsanschluss des zweiten positiven Pneumatik-Regelventils (22) als auch ein Unterdruckdetektionsanschluss des zweiten negativen Pneumatik-Regelventils (52) mit dem Getriebe (P4) verbunden sind;
wenn die Druckdifferenz zwischen der Öl- und Gasdichtungskammer (P2) und dem Getriebe (P4) größer als oder gleich einem dritten voreingestellten Wert ist, das zweite positive Pneumatik-Regelventil (22) geöffnet wird und das zweite negative Pneumatik-Regelventil (52) sich in einem geschlossenen Zustand befindet; und
wenn die Druckdifferenz zwischen der Öl- und Gasdichtungskammer (P2) und dem Getriebe (P4) kleiner als oder gleich einem vierten voreingestellten Wert ist, das zweite negative Pneumatik-Regelventil (52) geöffnet wird und das zweite positive Pneumatik-Regelventil (22) sich in einem geschlossenen Zustand befindet.

3. Hauptantriebshochdruckdichtungssystem für eine Schildmaschine nach Anspruch 2, das weiter eine Leckdetektionskammer (P3), ein drittes positives Pneumatik-Regelventil (23) und ein drittes negatives Pneumatik-Regelventil (53) umfasst, wobei
der Auslass des zweiten positiven Pneumatik-Regelventils (22) mit einem Einlass des dritten positiven Pneumatik-Regelventils (23) verbunden ist, ein Auslass des dritten positiven Pneumatik-Regelventils (23) mit einem Einlass des dritten negativen Pneumatik-Regelventils (53) und der Leckdetektionskammer (P3) verbunden ist, und ein Auslass des dritten negativen Pneumatik-Regelventils (53) mit der Abgasleitung verbunden ist;
sowohl ein Überdruckdetektionsanschluss des dritten positiven Pneumatik-Regelventils (23) als auch ein Überdruckdetektionsanschluss des dritten negativen Pneumatik-Regelventils (53) mit dem Getriebe (P4) verbunden sind;
sowohl ein Unterdruckdetektionsanschluss des dritten positiven Pneumatik-Regelventils (23) als auch ein Unterdruckdetektionsanschluss des dritten negativen Pneumatik-Regelventils (53) mit der Leckdetektionskammer (P3) verbunden sind;
wenn die Druckdifferenz zwischen dem Getriebe (P4) und der Leckdetektionskammer (P3) größer als oder gleich einem fünften voreingestellten Wert ist, das dritte positive Pneumatik-Regelventil (23) geöffnet wird und das dritte negative Pneumatik-Regelventil (53) sich in einem geschlossenen Zustand befindet; und
wenn die Druckdifferenz zwischen dem Getriebe (P4) und der Leckdetektionskammer (P3) kleiner als oder gleich einem sechsten voreingestellten Wert ist, das dritte negative Pneumatik-Regelventil (53) geöffnet wird und das dritte positive Pneumatik-Regelventil (23) sich in einem geschlossenen Zustand befindet.

4. Hauptantriebshochdruckdichtungssystem für eine Schildmaschine nach Anspruch 3, wobei ein erstes Rückschlagventil (61) am Auslass des ersten negativen Pneumatik-Regelventils (51) vorgesehen ist;
und/oder ein zweites Rückschlagventil (62) am Auslass des zweiten negativen Pneumatik-Regelventils (52) vorgesehen ist;
und/oder ein drittes Rückschlagventil (63) am Auslass des dritten negativen Pneumatik-Regelventils (53) vorgesehen ist.

5. Hauptantriebshochdruckdichtungssystem für eine Schildmaschine nach Anspruch 3, wobei ein erstes Sicherheitsventil (31) und/oder ein erster Drucksensor (41) weiter an einer Auslassverbindungsleitung des ersten positiven Pneumatik-Regelventils (21) vorgesehen ist;
und/oder ein zweites Sicherheitsventil (32) und/oder ein zweiter Drucksensor (42) weiter an einer Auslassverbindungsleitung des zweiten positiven Pneumatik-Regelventils (22) vorgesehen ist;
und/oder ein drittes Sicherheitsventil (33) und/oder ein dritter Drucksensor (43) weiter an einer Auslassverbindungsleitung des dritten positiven Pneumatik-Regelventils (23) vorgesehen ist.

6. Hauptantriebshochdruckdichtungssystem für eine Schildmaschine nach Anspruch 3, das weiter eine Notdruckentlastungsleitung umfasst, die mit der Öl- und Gasdichtungskammer (P2), dem Getriebe (P4) und der Leckdetektionskammer (P3) verbunden ist.

7. Hauptantriebshochdruckdichtungssystem für eine Schildmaschine nach Anspruch 6, wobei ein viertes Rückschlagventil (71) zwischen der Öl- und Gasdichtungskammer (P2) und der Notdruckentlastungsleitung vorgesehen ist;
und/oder ein fünftes Rückschlagventil (72) zwischen dem Getriebe (P4) und der Notdruckentlastungsleitung vorgesehen ist;
und/oder ein sechstes Rückschlagventil (73) zwischen der Leckdetektionskammer (P3) und der Notdruckentlastungsleitung vorgesehen ist;
und/oder ein erstes Kugelventil (8) an der Notdruckentlastungsleitung vorgesehen ist;
und/oder ein erster Schalldämpfer (91) an der Notdruckentlastungsleitung vorgesehen ist.

8. Hauptantriebshochdruckdichtungssystem für eine Schildmaschine nach Anspruch 1, wobei ein zweiter Schalldämpfer (92) an der Abgasleitung vorgesehen ist.

9. Schlammausgleichsschildmaschine, die mit dem Hauptantriebshochdruckdichtungssystem für eine Schildmaschine nach einem der Ansprüche 1 bis 8 versehen ist.

10. Schlammausgleichsschildmaschine nach Anspruch 9, weiter umfassend
eine Füllstandprüfeinheit (12), die so konfiguriert ist, dass sie einen Füllstand in einer Getriebeölkammer erkennt;
und/oder eine Absaugeinheit (13), die so konfiguriert ist, dass sie das Getriebe (P4) entleert;
und/oder einen Öl- und Gasdichtungstank (11), der zwischen der Öl- und Gasdichtungskammer (P2) und der Getriebeölkammer vorgesehen ist, wobei ein oberer Füllstandgrenzschalter (101) und/oder ein unterer Füllstandgrenzschalter (102) am Öl- und Gasdichtungstank (11) vorgesehen sind.

## Revendications

1. Système d'étanchéité à haute pression d'entraînement principal pour machine de protection comprenant un bac à coussin d'air, une chambre d'étanchéité à l'huile et au gaz (P2), un orifice d'entrée d'air comprimé, une première vanne de régulation pneumatique positive (21) et une première vanne de régulation pneumatique négative (51), dans lequel
une entrée de l'orifice d'entrée d'air comprimé est configurée pour se raccorder à une source d'air, une sortie de l'orifice d'entrée d'air comprimé est raccordée à une entrée de la première vanne de régulation pneumatique positive (21), une sortie de la première vanne de régulation pneumatique positive (21) est raccordée à une entrée de la première vanne de régulation pneumatique négative (51) et de la chambre étanche à l'huile et au gaz (P2), et une sortie de la première vanne de régulation pneumatique négative (51) est raccordée à une canalisation d'échappement ;
une borne de détection de pression positive de la première vanne de régulation pneumatique positive (21) et une borne de détection de pression positive de la première vanne de régulation pneumatique négative (51) sont toutes deux raccordées au bac à coussin d'air ;
une borne de détection de pression négative de la première vanne de régulation pneumatique positive (21) et une borne de détection de pression négative de la première vanne de régulation pneumatique négative (51) sont toutes deux raccordées à la chambre d'étanchéité à l'huile et au gaz (P2) ;
lorsque la différence de pression entre le bac à coussin d'air et la chambre d'étanchéité à l'huile et au gaz (P2) est supérieure ou égale à une première valeur prédéfinie, la première vanne de régulation pneumatique positive (21) est ouverte, et la première vanne de régulation pneumatique négative (51) est dans un état fermé ; et
lorsque la différence de pression entre le bac à coussin d'air et la chambre d'étanchéité à l'huile et au gaz (P2) est inférieure ou égale à une deuxième valeur prédéfinie, la première vanne de régulation pneumatique négative (51) est ouverte, et la première vanne de régulation pneumatique positive (21) est dans un état fermé.

2. Système d'étanchéité à haute pression d'entraînement principal pour machine de protection selon la revendication 1, comprenant en outre une boîte de vitesses (P4), une deuxième vanne de régulation pneumatique positive (22) et une deuxième vanne de régulation pneumatique négative (52), dans lequel
la sortie de l'orifice d'entrée d'air comprimé est raccordée à une entrée de la deuxième vanne de régulation pneumatique positive (22), une sortie de la deuxième vanne de régulation pneumatique positive (22) est raccordée à une entrée de la deuxième vanne de régulation pneumatique négative (52) et de la boîte de vitesses (P4), et une sortie de la deuxième vanne de régulation pneumatique négative (52) est raccordée à la canalisation d'échappement ;
une borne de détection de pression positive de la deuxième vanne de régulation pneumatique positive (22) et une borne de détection de pression positive de la deuxième vanne de régulation pneumatique négative (52) sont toutes deux raccordées à la chambre d'étanchéité à l'huile et au gaz (P2) ;
une borne de détection de pression négative de la deuxième vanne de régulation pneumatique positive (22) et une borne de détection de pression négative de la deuxième vanne de régulation pneumatique négative (52) sont toutes deux raccordées à la boîte de vitesses (P4) ;
lorsque la différence de pression entre la chambre d'étanchéité à l'huile et au gaz (P2) et la boîte de vitesses (P4) est supérieure ou égale à une troisième valeur prédéfinie, la deuxième vanne de régulation pneumatique positive (22) est ouverte, et la deuxième vanne de régulation pneumatique négative (52) est dans un état fermé ; et
lorsque la différence de pression entre la chambre d'étanchéité à l'huile et au gaz (P2) et la boîte de vitesses (P4) est inférieure ou égale à une quatrième valeur prédéfinie, la deuxième vanne de régulation pneumatique négative (52) est ouverte, et la deuxième vanne de régulation pneumatique positive (22) est dans un état fermé.

3. Système d'étanchéité à haute pression d'entraînement principal pour machine de protection selon la revendication 2, comprenant en outre une chambre de détection de fuite (P3), une troisième vanne de régulation pneumatique positive (23) et une troisième vanne de régulation pneumatique négative (53), dans lequel
la sortie de la deuxième vanne de régulation pneumatique positive (22) est raccordée à une entrée de la troisième vanne de régulation pneumatique positive (23), une sortie de la troisième vanne de régulation pneumatique positive (23) est raccordée à une entrée de la troisième vanne de régulation pneumatique négative (53) et de la chambre de détection de fuite (P3), et une sortie de la troisième vanne de régulation pneumatique négative (53) est raccordée à la canalisation d'échappement ;
une borne de détection de pression positive de la troisième vanne de régulation pneumatique positive (23) et une borne de détection de pression positive de la troisième vanne de régulation pneumatique négative (53) sont toutes deux raccordées à la boîte de vitesses (P4) ;
une borne de détection de pression négative de la troisième vanne de régulation pneumatique positive (23) et une borne de détection de pression négative de la troisième vanne de régulation pneumatique négative (53) sont toutes deux raccordées à la chambre de détection de fuite (P3) ;
lorsque la différence de pression entre la boîte de vitesses (P4) et la chambre de détection de fuite (P3) est supérieure ou égale à une cinquième valeur prédéfinie, la troisième vanne de régulation pneumatique positive (23) est ouverte, et la troisième vanne de régulation pneumatique négative (53) est dans un état fermé ; et
lorsque la différence de pression entre la boîte de vitesses (P4) et la chambre de détection de fuite (P3) est inférieure ou égale à une sixième valeur prédéfinie, la troisième vanne de régulation pneumatique négative (53) est ouverte, et la troisième vanne de régulation pneumatique positive (23) est dans un état fermé.

4. Système d'étanchéité à haute pression d'entraînement principal pour machine de protection selon la revendication 3, dans lequel un premier clapet anti-retour (61) est prévu à la sortie de la première vanne de régulation pneumatique négative (51) ;
et/ou, un deuxième clapet anti-retour (62) est prévu à la sortie de la deuxième vanne de régulation pneumatique négative (52) ;
et/ou, un troisième clapet anti-retour (63) est prévu à la sortie de la troisième vanne de régulation pneumatique négative (53).

5. Système d'étanchéité à haute pression d'entraînement principal pour machine de protection selon la revendication 3, dans lequel une première vanne de sécurité (31) et/ou un premier capteur de pression (41) sont en outre prévus sur une canalisation de raccordement de sortie de la première vanne de régulation pneumatique positive (21) ;
et/ou une deuxième vanne de sécurité (32) et/ou un deuxième capteur de pression (42) sont en outre prévus sur une canalisation de raccordement de sortie de la deuxième vanne de régulation pneumatique positive (22) ;
et/ou une troisième vanne de sécurité (33) et/ou un troisième capteur de pression (43) sont en outre prévus sur une canalisation de raccordement de sortie de la troisième vanne de régulation pneumatique positive (23).

6. Système d'étanchéité à haute pression d'entraînement principal pour machine de protection selon la revendication 3, comprenant en outre une canalisation de décompression d'urgence raccordée à la chambre d'étanchéité à l'huile et au gaz (P2), à la boîte de vitesses (P4) et à la chambre de détection de fuite (P3).

7. Système d'étanchéité à haute pression d'entraînement principal pour machine de protection selon la revendication 6, dans lequel un quatrième clapet anti-retour (71) est prévu entre la chambre d'étanchéité à l'huile et au gaz (P2) et la canalisation de décompression d'urgence ;
et/ou, un cinquième clapet anti-retour (72) est prévu entre la boîte de vitesses (P4) et la canalisation de décompression d'urgence ;
et/ou, un sixième clapet anti-retour (73) est prévu entre la chambre de détection de fuite (P3) et la canalisation de décompression d'urgence ;
et/ou, un premier robinet à tournant sphérique (8) est prévu sur la canalisation de décompression d'urgence ;
et/ou, un premier silencieux (91) est prévu sur la canalisation de décompression d'urgence.

8. Système d'étanchéité à haute pression d'entraînement principal pour machine de protection selon la revendication 1, dans lequel un second silencieux (92) est prévu sur la canalisation d'échappement.

9. Machine de protection d'équilibrage de bouillie, équipée du système d'étanchéité à haute pression d'entraînement principal pour machine de protection selon l'une quelconque des revendications 1 à 8.

10. Machine de protection d'équilibrage de bouillie selon la revendication 9, comprenant en outre
un dispositif de commande de niveau de liquide (12) configuré pour détecter un niveau de liquide dans une chambre d'huile d'engrenage ;
et/ou, un respirateur (13) configuré pour vider la boîte de vitesses (P4) ;
et/ou, un réservoir d'étanchéité à l'huile et au gaz (11) prévu entre la chambre d'étanchéité à l'huile et au gaz (P2) et la chambre d'huile d'engrenage, dans lequel un commutateur de niveau de liquide à limite supérieure (101) et/ou un commutateur de niveau de liquide à limite inférieure (102) sont prévus sur le réservoir d'étanchéité à l'huile et au gaz (11).
